# EUROPEAN PATENT APPLICATION

(11) **EP 4 566 988 A1**
(43) Date of publication of application: **11.06.2025**
(21) Application number: 23214041.8
(22) Date of filing: 04.12.2023
(51) Int. Cl.: C01B 3/04, C01B 3/50, C01B 3/52, C01B 3/56

(54) **MULTISTAGE ELECTRICALLY HEATED ADIABATIC AMMONIA CRACKING PROCESS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Mello Gabbrielleschi, Bruna, 60388 Frankfurt (DE); Pontzen, Florian, 60388 Frankfurt (DE); Schmidt, Robin, 60388 Frankfurt (DE)
(74) Representative: Air Liquide

(57) **Abstract**

The invention relates to a process for the production of hydrogen gas (4) from ammonia, thereby obtaining an effluent gas (6) comprising hydrogen gas (4). Said process comprising the following steps:
- providing an ammonia feedstock stream (8);
- performing at least one electrical heating and conversion step, said step comprising:
heating in at least one electric heater (12) the ammonia feedstock stream (8) so as to produce a heated gas stream (14); and
performing in at least one adiabatic reactor (16) an endothermic cracking reaction of the heated gas stream (14), said adiabatic reactor (16) comprising at least one catalyst bed (18) performing said endothermic cracking reaction of the ammonia feedstock stream (8) into said effluent gas (6).

## Description

The present invention relates to a process for the production of hydrogen gas from ammonia. The invention also relates to an apparatus for the production of hydrogen gas from ammonia. The invention also relates to the use of such apparatus for ammonia cracking reaction.

Hydrogen is renowned for its lightweight nature and optimal combustion properties as a fuel and its environment-friendliness during its combustion, i.e., no emission of any carbon dioxide (CO2), particulate or sulfur, as well as nitrogen oxide (NOx) when combusted with air as oxidizer. This makes hydrogen an attractive vector for the energy transition.

However, transporting pure hydrogen gas is a complex challenge for safety reasons and energy density. To this end, ammonia (NH3), containing three atoms of hydrogen and facilitating the transport of hydrogen, is a good alternative as a fuel to pure hydrogen gas (H2).

A hydrogen containing gas can be produced by an endothermic cracking reaction of an ammonia feedstock stream in a catalytic reactor, for example a plug flow reactor, filled with a catalyst bed. The reactor requires a significant amount of heat and energy so as to maintain said reaction. Accordingly, the ammonia feedstock stream and reactor need to be heated up sufficiently high in order to reach a targeted conversion, for example, at a temperature range comprised between 400°C and 800°C.

A known solution to produce hydrogen from ammonia is to use such reactor placed inside a firebox. In said firebox, it is known to use some of the available ammonia as fuel to provide heat to the endothermal reaction of ammonia cracking. Nevertheless, ammonia suffers from slow kinetics during its combustion. In addition, the combustion of ammonia produces the nitrogen oxide, harmful when inhaled.

Regardless of which fuel is used, the use of such indirect heat exchange reactor comes with a significant waste heat generated. Therefore, a waste heat recovery system and a flue gas treatment are required.

As a consequence, there is a need to keep the reaction medium temperature high enough to reach a reasonable ammonia conversion whilst making the process economically feasible and scalable.

Within this framework, efforts are being made to produce an effluent gas comprising hydrogen gas from an ammonia feedstock stream so as to counterbalance these issues.

For this purpose, the invention relates to a process for the production of hydrogen gas from ammonia, thereby obtaining an effluent gas comprising hydrogen gas, said process comprising the following steps:
- providing an ammonia feedstock stream;
- performing at least one electrical heating and conversion step, said step comprising:
   an electrical heating step comprising heating in at least one electric heater the ammonia feedstock stream so as to produce a heated gas stream; and
   a conversion step comprising performing in at least one adiabatic reactor an endothermic cracking reaction of the heated gas stream, said adiabatic reactor comprising at least one catalyst bed performing said endothermic cracking reaction of the ammonia feedstock stream into said effluent gas.

Thanks to the invention, a great modularity of the process is allowed since the invention enables a single electrical heating and conversion step or a plurality of electrical heating and conversion steps according to the needs, in particular as a function of a conversion rate at the end of the overall process.

In other words, by separating a classical ammonia cracking conversion into two distinct steps, an electrical heating step and a conversion step, it becomes possible to customize a targeted conversion rate of the ammonia feedstock stream into hydrogen gas according to the number of said electrical heating and conversion steps, knowing that said conversion rate can be increased while increasing the number of electrical heating and conversion steps and the temperature level in the preheaters.

In particular, during the electrical heating step, the temperature of the ammonia feedstock stream is brought to a temperature at which the endothermic cracking reaction can take place.

During the conversion step, no additional heat is supplied to the heated gas stream such that the temperature of said gas stream gradually decreases alongside the adiabatic reactor until said temperature reaches a temperature at which the catalyst is already under deactivation.

Furthermore, the use of electrical heating does not require feeding a fuel into a firebox in order to provide heat to the reaction medium, thus eliminating this related cost. Since there is no combustion during the electrical heating step, no further flue gas treatment is required.

In a nutshell, the invention allows to improve the modularity of the overall process, while simplifying said process and optimizing the cost and conversion rate of said process.

The term "adiabatic reactor" is used to denote a chemical reactor in which a decrease in temperature from the inlet to the outlet of the reactor is experienced.

The term "electric heater" is used to mean an electrically supplied appliance configured to heat, for instance based on Joule heating effect, the ammonia feedstock stream. The electric heater does not contain any catalyst bed suitable for converting a chemical reactant (e.g. ammonia) into a chemical product (e.g. hydrogen gas). Therefore, the endothermic cracking reaction of the ammonia feedstock stream occurring within the electric heater can be neglected compared with said reaction of such ammonia feedstock stream occurring within the adiabatic reactor.

The term "effluent gas" is used to denote the raw gas product produced by the endothermic cracking reaction that converts ammonia into hydrogen gas in the conversion step prior to a purification step. The effluent gas can advantageously comprise hydrogen gas, nitrogen gas and potentially some uncracked ammonia.

The invention may comprise at least one of the following optional features, taken independently or in combination.

The electric heater is based on Joule heating effect.

The electric heater is based on electromagnetic induction.

Each of the electrical heating and conversion steps can require a plurality of electric heater and/or a plurality of adiabatic reactors.

At least one of the electric heaters, in particular the first electric heater, is protected with a protective coating so as to prevent nitridation of said electric heater.

Alternatively, the temperature of the first electric heater is below a critical temperature, namely around 500 °C.

The temperature of the first electric heater can be higher when the first electric heater is protected with the protective coating.

The process comprises the following steps:
- performing at least two electrical heating and conversion steps, among which a first electrical heating and conversion step and a last electrical heating and conversion step.

Said last electrical heating and conversion step may comprise:
- heating in a last electric heater an upstream partially converted gas stream from the upstream adiabatic reactor so as to produce a last heated partially converted gas stream;
- performing in a last adiabatic reactor a last endothermic cracking reaction of the last heated partially converted gas stream, said last adiabatic reactor comprising at least one catalyst bed performing an endothermic cracking reaction of the ammonia feedstock stream into hydrogen gas, thereby obtaining said effluent gas.

Said first electrical heating and conversion step may comprise:
- heating in a first electric heater the ammonia feedstock stream so as to produce a first heated ammonia stream;
- performing in an adiabatic reactor a first endothermic cracking reaction of the first heated ammonia stream, said adiabatic reactor comprising at least one catalyst bed suitable for converting ammonia into a first partially converted gas stream comprising hydrogen gas.

The process comprises a step of bypassing at least one or some of the electrical heating and conversion step.

The process further comprises a step of removing uncracked ammonia from the effluent gas, thereby obtaining an unconverted ammonia stream and an ammonia depleted effluent gas.

Said step of removing uncracked ammonia may be performed by partial condensation of the uncracked ammonia, temperature swing adsorption (TSA), scrubbing of the uncracked ammonia, for example water wash of the uncracked ammonia.

The process further comprises a step of recycling the unconverted ammonia stream resulting from the step of removing uncracked ammonia as a part of the ammonia feedstock stream.

Said effluent gas comprises nitrogen gas.

The process comprises a step of providing the ammonia feedstock stream from a liquid ammonia feed.

The process comprises a step of vaporizing the ammonia feedstock stream in a vaporizer, in particular by using the effluent gas as a heat source into the vaporizer, so as to provide the ammonia feedstock stream from said liquid ammonia feed.

The process comprises a step of providing the ammonia feedstock stream from a vaporized liquid ammonia feed.

Said ammonia feedstock stream can be brought to a hot enough temperature so as to circumvent a use of a preheater.

The process comprises a step of pumping the liquid ammonia feed by means of a pump prior of the step of vaporizing the ammonia feedstock stream.

The process comprises a step of vaporizing the liquid ammonia feed in a vaporizer, in particular by using a pre-cooled effluent gas, so as to provide a vaporized ammonia feedstock stream.

The effluent gas is cooled down within an ammonia feedstock stream preheater so as to form said pre-cooled effluent gas. This has the benefit that a maximum heat is recovered from the effluent gas.

The process comprises a step of providing the ammonia feedstock stream from a pipeline containing gaseous ammonia.

This way, the ammonia feedstock stream in gaseous form can be directly provided into the preheater.

The process further comprises a step of preheating the ammonia feedstock stream with the preheater so as to produce a preheated ammonia feedstock stream upstream of the at least one electrical heating and conversion step.

The step of preheating the ammonia feedstock stream, in particular the vaporized ammonia feedstock stream, with the preheater so as to produce a preheated ammonia feedstock stream, is upstream of the first electrical heating and conversion step.

In the step of preheating, the ammonia feedstock stream is preheated with said effluent gas.

The process may further comprise:
an upstream cracking step upstream of the at least one electrical heating and conversion step, said upstream cracking step being performed with a heat source including a water boiler or with the preheater, or with a combination thereof.

In particular, the upstream cracking step is performed upstream of the first electrical heating and conversion step.

The heating load is higher at the first electric heater than at the rest of the electric heater of other electrical heating and conversion step(s).

By the term "heating load", it is meant a heating power that is supplied to the ammonia feedstock stream, whether in liquid or gaseous form. The higher the heating load, the higher the temperature of said stream is at a given duration of time.

Given the gap in temperature between the initial temperature of the ammonia feedstock stream and the desired temperature of the ammonia feedstock at the outlet, the first electric heater may be configured to provide a larger amount of heat to the ammonia than other electric heaters.

The temperature of the ammonia feedstock stream upstream of the first electric heater is low compared with the upstream of the rest of the electric heater of other electrical heating and conversion step(s). Therefore, the heating load can be adapted in order to adjust the temperature difference.

The heating load may be higher at the last electric heater than the rest of the electric heater of other electrical heating and conversion step(s).

Thus, the higher heating load at the last electric heater compared with the rest of the electric heater of other intermediate conversion steps allows to reach a desired conversion rate, in particular before any separation or purification step of hydrogen gas from the effluent gas.

In order to reach a final expected conversion of the ammonia into the hydrogen gas, the last electric heater may be configured to provide a larger amount of heat to the ammonia than other electric heaters.

The heating load is higher at the first electric heater and at the last electric heater than the rest of the electric heater of other electrical heating and conversion step(s).

The process further comprises a step of hydrogen gas purification comprising feeding the effluent gas, in particular the ammonia depleted effluent gas, into a hydrogen gas purification unit, thereby obtaining a purified effluent gas comprising hydrogen gas and an offgas.

The step of hydrogen gas purification comprises separating hydrogen gas from nitrogen gas and thus yielding a purified hydrogen gas.

Said step of hydrogen gas purification is performed by pressure swing adsorption (PSA), temperature swing adsorption (TSA), separation by partial condensation, for example cryogenic separation or cryogenic distillation, membrane separation, or a combination thereof.

Specifically, the cryogenic separation or distillation has the advantage of decreasing significantly the content of hydrogen gas in said offgas. The hydrogen recovery from the effluent gas is increased.

A plurality of PSA or a combination of at least one PSA with a downstream membrane can be used as said hydrogen gas purification unit.

For example, two PSA in series can be provided so as to feed offgas from the first PSA into the second PSA, in order to recover the most of the hydrogen gas in said offgas.

Of course, the purification step can be done regardless of the fact that there is the ammonia depleted effluent gas.

The term "offgas" refers to the exhaust gas or remaining gas produced at the hydrogen gas purification unit after separating hydrogen gas from nitrogen gas. Said "offgas" comprises, for example nitrogen gas and remaining hydrogen gas which have been drawn into said offgas by the internal operation of the hydrogen gas purification unit, although the content of the residual hydrogen gas is low when compared to the content of nitrogen gas.

The hydrogen content of said purified effluent gas is greater than 90%, advantageously greater than 99.99%, preferably greater than 99.999%.

The temperature at the inlet of the electric heater is comprised between 20 and 500°C.

The temperature at the inlet of the adiabatic reactor is comprised between 400 and 800 °C.

The temperature at the outlet of the adiabatic reactor is comprised between 300 and 500 °C.

The invention also relates to an apparatus for the production of hydrogen gas from ammonia, said apparatus comprising:
- at least one electrical heating and conversion stage comprising:
   ∘ an electric heater configured to receive the ammonia feedstock stream so as to produce a heated gas stream; and
   ∘ an adiabatic reactor arranged to perform an endothermic cracking reaction of the heated gas stream, said adiabatic reactor comprising at least one catalyst bed suitable for said endothermic cracking reaction of the ammonia feedstock stream into an effluent gas comprising hydrogen gas.

The invention may comprise at least one of the following optional features, taken independently or in combination.

The electric heater is based on Joule heating effect.

The electric heater is based on electromagnetic induction.

Some of the electrical heating and conversion stages are identical to each other.

All electrical heating and conversion stages are identical to each other.

As a variant, at least two of the electrical heating and conversion stages are different from each other.

In this case, some of electrical heating and conversion stages can comprise a different number of electric heater and adiabatic reactor or these stages can have different types of catalyst bed compared to each other.

The apparatus comprises:
- at least two electrical heating and conversion stages, among which a first electrical heating and conversion stage and a last electrical heating and conversion stage, said stages being placed one after the other or in series.

Said last electrical heating and conversion stage comprises:
∘ at least one last electric heater configured to heat an upstream partially converted gas stream from the adiabatic reactor of the upstream conversion stage so as to produce a last heated partially converted gas stream; and
∘ at least one last adiabatic reactor configured to perform a last endothermic cracking reaction of the last heated partially converted gas stream, said last adiabatic reactor comprising at least one catalyst bed suitable for converting ammonia into said effluent gas.

Said first electrical heating and conversion stage comprises:
∘ at least one first electric heater configured to heat an upstream ammonia feedstock stream so as to produce a first heated ammonia stream; and
∘ at least one adiabatic reactor configured to perform a first endothermic cracking reaction of the first heated ammonia stream, said adiabatic reactor comprising at least one catalyst bed suitable for an endothermic cracking reaction of the ammonia feedstock stream into a first partially converted gas stream comprising hydrogen gas.

The apparatus comprises:
a pump configured to be fed with the ammonia feedstock stream, in particular the ammonia feedstock stream from a liquid ammonia feed.

The apparatus comprises:
a vaporizer configured to provide a vaporized ammonia feedstock stream from the ammonia feedstock stream.

The apparatus comprises:
a pump arranged to be fed with said liquid ammonia feed .

The vaporizer is arranged downstream of the pump.

The apparatus further comprises a preheater arranged to preheat the ammonia feedstock stream so as to produce a preheated ammonia feedstock stream upstream of the at least one electrical heating and conversion stage.

The preheater is arranged to preheat the ammonia feedstock stream, for example the vaporized ammonia feedstock stream, so as to produce a preheated ammonia feedstock stream upstream of the at least one electrical heating and conversion stage.

The ammonia feedstock stream can be brought to a hot enough temperature so as to circumvent a use of the preheater.

The apparatus further comprises an uncracked ammonia removal unit configured to remove uncracked ammonia from the effluent gas.

The ammonia removal unit allows to obtain from said effluent gas an unconverted ammonia stream and an ammonia depleted effluent gas.

The apparatus further comprises a hydrogen gas purification unit configured to be fed with the effluent gas, in particular with an ammonia depleted effluent gas from the ammonia removal unit.

This way, the hydrogen gas purification unit allows gas to obtain from the effluent a purified effluent gas comprising hydrogen gas and to obtain an offgas.

The apparatus further comprises at least three electrical heating and conversion stages, advantageously, at least four electrical heating and conversion stages, preferably at least five electrical heating and conversion stages.

With five electrical heating and conversion stages and the temperature of the inlet of the adiabatic reactors at 600 °C, a conversion rate of 95% can be expected. Above six electrical heating and conversion stages, the conversion rate can be superior to 99%.

The apparatus further comprises at least a bypass line arranged to bypass at least one or some of the electrical heating and conversion stages.

This way, there is no substantial reaction in the bypassed electrical heating and conversion stages and the cracking reaction takes place only in the remaining other electrical heating and conversion stages.

The use of the bypass line allows to reduce the exchange of catalyst loading within the adiabatic reactor and allows a maintenance intervention in case where one conversion stage or a plurality of conversion stages needs to be checked or to be repaired. The bypass line may also be used during part-load operation.

The bypass line can be a duct or a pipe, which is arranged to circumvent one or some of said electrical heating and conversion stages. The bypass line allows to increase or decrease the number of said stages. In other words, the bypass line allows to modulate the number of said stages while connecting a stage with another stage of the apparatus.

For instance, said bypass line is configured to connect some of said stages between them so as to isolate at least one stage between said connected stages.

The apparatus further comprises:
an upstream cracking stage upstream of the at least one electrical heating and conversion stage, said upstream cracking stage comprises:
a heat source including a water boiler or the preheater, or a combination thereof.

The upstream cracking stage is upstream of the first electrical heating and conversion stage.

At least one of the electric heaters, in particular the first electric heater and / or the preheater, is protected with a protective coating so as to prevent nitridation of said electric heater.

Alternatively, the temperature of the first electric heater is below a critical temperature, namely around 500 °C.

The adiabatic reactor is a plug flow reactor or a shaft reactor.

The catalyst bed comprises ruthenium, nickel, aluminum oxide, or a combination thereof.

The catalyst bed of each adiabatic reactor is identical compared to the other adiabatic reactors.

The catalyst beds of at least two adiabatic reactors are identical compared to each other.

The adiabatic reactor of one of said electrical heating and conversion stages, in particular the first electrical heating and conversion stage, comprises a catalyst bed configured to be activated at an activation temperature lower than the activation temperature of the catalyst bed of the adiabatic reactor of the other of said subsequent stages.

The adiabatic reactor, in particular the adiabatic reactor of the last electrical heating and conversion stage, comprises a reaction chamber and at least two catalyst beds, among which:
- a first catalyst bed in a first zone of the reaction chamber,
- a second catalyst bed in a second zone of the reaction chamber, said second zone being placed downstream the first zone in the ammonia feedstock stream flow direction.

The first and a second catalyst beds are arranged to perform an endothermic cracking reaction of ammonia into the reaction chamber, the first catalyst bed having an activation temperature that is higher than an activation temperature of the second catalyst bed.

The reactor of the invention allows to optimize the cracking reaction all along the reaction chamber and to limit the degradation of the catalyst beds which have their own activation temperature.

The first zone is adjacent to the second zone.

The first zone and the second zone are separated by a fluid permeable layer arranged to retain the first catalyst bed in the first zone and the second catalyst bed in the second zone. In a variant, the catalysts of the first and second catalyst beds may be filled in the reactor directly one upon another.

The activation temperature of the first catalyst bed is comprised between 600°C and 800°C.

The activation temperature of the second catalyst bed is comprised between 400°C and 700°C.

The temperature of the reactor decreases all along the reactor. Thus, because the activation temperature of the first catalyst bed is higher than the activation temperature of the second catalyst bed, the cracking reaction is optimized and the catalyst beds are not damaged by a too high temperature of the ammonia feedstock stream and/or the partially cracked ammonia gas stream.

The catalyst beds comprise a catalytically active material, in particular a catalytically active material on a carrier, for example an aluminum oxide (Al2O3) carrier.

In particular, such material is able to avoid nitridation.

The first and the second catalyst beds comprise the same catalytically active material, for example nickel as a catalytically active material.

The first and the second catalyst beds comprise a different concentration of the same catalytically active material, for example a catalytically active material comprising nickel.

The first and second catalyst beds may comprise from 5 to 75 wt% of nickel.

For example, the first catalyst bed comprises from 10 to 45 wt% of nickel, preferably from 15 to 30 wt% of nickel as a catalytically active material, and the second catalyst bed comprises up to 50 wt% of nickel, preferably from 20 to 40 wt% of nickel as a catalytically active material.

The first catalyst bed comprises a catalytically active material different from the catalytically active material of the second catalyst bed.

For example, the first catalyst bed comprises nickel as a catalytically active material and the second catalyst bed comprises ruthenium as a catalytically active material.

The second catalyst bed comprises from 0.5 to 4 wt% of ruthenium as a catalytically active material.

The catalyst beds are structured catalyst layers.

Alternatively, the catalyst beds are dumped catalyst beds.

The reactor comprises more than two catalyst beds, each catalyst bed being arranged in a different zone of the reaction chamber.

The catalyst bed comprised in the zone the closest to the adiabatic reactor inlet has the highest activation temperature of all the catalyst beds, and the catalyst bed comprised in the zone the closest to the adiabatic reactor outlet has the lowest activation temperature of all the catalyst beds.

The catalyst beds are arranged such that their activation temperature is decreasing from the inlet to the outlet, each catalyst bed having its activation temperature.

Hence, the second catalyst bed will start safely before coming close to the first catalyst bed maximum application temperature. By "catalyst bed maximum application temperature", we mean here the maximum temperature to which a catalyst bed may be heated. Beyond such a maximum application temperature the catalyst may be damaged.

The adiabatic reactor is arranged so that the ammonia feedstock stream at the inlet of said reactor has a temperature comprised between 400°C and 900°C, preferably between 600 and 800°C.

The inlet of the adiabatic reactor of the first electrical heating and conversion stage has a temperature comprised between 500 and 700°C.

The inlet of the adiabatic reactor of last first electrical heating and conversion stage has a temperature comprised between 600 and 850°C.

The adiabatic reactor is arranged such that the effluent gas at the outlet of said reactor has a temperature comprised between 300°C and 600°C, preferably between 400 and 500 °C. For example, the temperature of the outlet of said reactor is at around 450°C.

An outlet region of the adiabatic reactor comprises low temperature active catalyst, for example a catalyst active at a temperature comprised between 300 and 600°C.

The invention also relates to the use of the apparatus of the invention for an endothermic cracking reaction of an ammonia feedstock stream into an effluent gas comprising hydrogen gas.

Note that all of the features and configurations described above are purely examples. Other features, details and advantages of the invention will become clearer on reading the detailed description set out below, together with several embodiments provided purely as examples and by way of indication, with reference to the attached schematic drawing, in which:

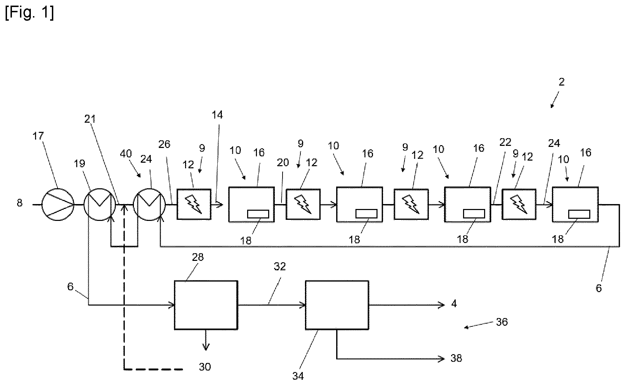

Fig. 1 schematically shows the apparatus of the invention as an illustrative and nonlimiting example.

Referring to figure 1, an apparatus 2 for the production of hydrogen gas from ammoniat.

Said apparatus 2 comprises four electrical heating and conversion stages 9, 10, all identical to each other, in terms of heating power and reactor volume.

The apparatus 2 comprises, a first electrical heating and conversion stage 9, 10 and a last electrical heating and conversion stage 9, 10, said stages being placed in series.

Said first electrical heating and conversion stage comprises:
∘ one first electric heater 12 configured to heat an upstream ammonia feedstock stream 8 so as to produce a first heated ammonia stream 14; and
∘ one first adiabatic reactor 16 configured to perform a first endothermic cracking reaction of the first heated ammonia stream 14, said adiabatic reactor 16 comprising one catalyst bed 18 suitable for endothermic cracking reaction of the ammonia feedstock stream 8 into a first partially converted gas stream 20 comprising hydrogen gas 4.

Said last electrical heating and conversion stage comprises:
∘ one last electric heater 12 configured to heat an upstream partially converted gas stream 22 from the adiabatic reactor 16 of the upstream conversion stage 10 so as to produce a last heated partially converted gas stream 24; and
∘ one last adiabatic reactor 16 configured to perform a last endothermic cracking reaction of the last heated partially converted gas stream 24, said last adiabatic reactor 16 comprising one catalyst bed 18 suitable for converting ammonia into said effluent gas 6.

The catalyst bed 18 comprises ruthenium, nickel, aluminum oxide, or a combination thereof.

The catalyst bed 18 of each adiabatic reactor 16 is identical compared to the other adiabatic reactors 18.

This way, the activation temperature of the catalyst bed 16 of each adiabatic reactor 16 is identical compared to each other.

The apparatus 2 comprises:
a pump 17 configured to be fed with the ammonia feedstock stream 8, in particular with the ammonia feedstock stream 8 from a liquid ammonia feed (not represented).

The apparatus 2 comprises:
a vaporizer 19, downstream of the pump 17, said vaporizer 19 configured to provide a vaporized ammonia feedstock stream 21 from the ammonia feedstock stream 8.

The apparatus 2 further comprises a preheater 24 arranged to preheat the vaporized ammonia feedstock stream 21 so as to produce a preheated ammonia feedstock stream 26 upstream of the first electrical heating and conversion stage 9, 10.

The apparatus 2 further comprises an uncracked ammonia removal unit 28 configured to removed uncracked ammonia from the effluent gas.

The ammonia recovery unit 28 allows to obtain from said effluent gas 6 an unconverted ammonia stream 30 and an ammonia depleted effluent gas 32.

The apparatus 2 further comprises a hydrogen gas purification unit 34 configured to be fed with the ammonia depleted effluent gas 32.

This way, the hydrogen gas purification unit 34 allows from the effluent gas 6 to obtain a purified effluent gas 36 comprising hydrogen gas 4 and an offgas 38.

In a non-depicted example, the apparatus 2 further comprises at least a bypass line (not depicted) configured to bypass at least one or some of the heating and conversion stages 9, 10.

This way, there is no substantial reaction in the heating and conversion stages 9, 10 that are bypassed and the cracking reaction takes place only in the remaining other heating and conversion stages 9,10.

The use of the bypass line allows to reduce the exchange of catalyst loading within the adiabatic reactor 16 and allows a maintenance intervention in case where one conversion stage 10 or a plurality of conversion stages 10 needs to be checked or to be repaired. The bypass line can also be used during part-load operation.

The bypass line can be a duct or a pipe, which is arranged to circumvent one or some of said heating and conversion stages. The bypass line allows to increase or decrease the number of said stages. In other words, the bypass line allows to modulate the number of said stages while connecting a stage with another stage of the apparatus 2.

For instance, said bypass line is configured to connect some of said stages between them so as to isolate at least one stage between said connected stages.

The apparatus 2 further comprises:
an upstream cracking stage 40 upstream of the first electric heating and conversion stage 9, 10, said upstream cracking stage 40 comprises a heat source including a water boiler (not depicted) or the preheater 24, or a combination thereof.

At least one of the electric heaters 12, in particular the first electric heater 12 and/or the preheater 24, is protected with a protective coating so as to prevent nitridation of said electric heater 12.

The temperature of the first electric heater 12 is below a critical surface temperature, namely around 500 °C.

A comparative example for the apparatus 2, based on six electrical heating and conversion stages 9, 10 is described below.

In order to achieve a modularized apparatus 2, all electrical heaters 12 were designed to have the same heating load in order to heat from 450°C after the previous adiabatic reactor 16 to a required inlet temperature of around 600°C.

For the first stage and the last stage, a higher heating load is needed in order to heat from 245°C to 600°C, and from 450°C to 745°C. In order to achieve that, an additional electrical heater 12 is introduced upstream of the first and the last stages with the same heating load like the other electrical heaters 12. Alternatively, two electric heaters 12 with double the capacity compared to the other electrical heaters 12 may be introduced upstream of the first and the last stages.

Using electrical heaters with the same electrical duty reduces the apparatus design effort and the capital expenditure (CAPEX).

With a total of six electrical heating and conversion stages 9, 10, approximately 99% of ammonia feedstock stream 8 was converted into hydrogen gas 4 and nitrogen gas.

Two purification methods for this component were considered downstream of the present invention for the following calculations: PSA and cryogenic method, namely cryogenic separation by nitrogen liquefaction.

PSA typically has a lower hydrogen gas recovery rate, namely comprised between 80 and 90% and in this case, larger quantities of offgas 38 comprising hydrogen gas 4 are available and need to be thermally valorized outside of the apparatus 2.

In case of a cryogenic separation, around 95% of hydrogen gas 4 can be recovered and in this case, the offgas 38 comprising hydrogen gas 4 may be flared. The overall ammonia and electricity consumption for this apparatus 2 is shown in Table 1 and compared with three SMR-based apparatus using different temperatures and purification technologies.

## Claims

1. Process for the production of hydrogen gas (4) from ammonia, thereby obtaining an effluent gas (6) comprising hydrogen gas (4), said process comprising the following steps:
- providing an ammonia feedstock stream (8);
- performing at least one electrical heating and conversion step, said step comprising:
heating in at least one electric heater (12) the ammonia feedstock stream (8) so as to produce a heated gas stream (14); and
performing in at least one adiabatic reactor (16) an endothermic cracking reaction of the heated gas stream (14), said adiabatic reactor (16) comprising at least one catalyst bed (18) performing said endothermic cracking reaction of the ammonia feedstock stream (8) into said effluent gas (6).

2. Process according to claim 1, comprising:
a step of providing the ammonia feedstock stream from a vaporized liquid ammonia feed; and
a step of vaporizing the ammonia feedstock stream (8) in a vaporizer (19), in particular by using a pre-cooled effluent gas, so as to provide a vaporized ammonia feedstock stream (21).

3. Process according to claim 1 or 2, further comprising:
a step of preheating the ammonia feedstock stream (8) with a preheater (24) so as to produce a preheated ammonia feedstock stream (26) upstream of the at least one electrical heating and conversion step.

4. Process according to any one of the preceding claims, further comprising:
an upstream cracking step upstream of the at least one electrical heating and conversion step, said upstream cracking step being performed with a heat source including a water boiler or with the preheater (24), or with a combination thereof.

5. Process according to any one of the preceding claims, further comprising:
a step of removing uncracked ammonia from the effluent gas (6) from, thereby obtaining an unconverted ammonia stream (30) and an ammonia depleted effluent gas (32).

6. Process according to claim 5, wherein said step of removing uncracked ammonia is performed by partial condensation of the uncracked ammonia, temperature swing adsorption (TSA), scrubbing of the uncracked ammonia, for example water wash of the uncracked ammonia.

7. Process according to any one of the preceding claims, further comprising:
a step of feeding the effluent gas (6), in particular the ammonia depleted effluent gas (32), into a hydrogen gas purification unit (34), thereby obtaining a purified effluent gas (36) comprising hydrogen gas (4) and offgas (38).

8. Process according to claim 7, wherein a plurality of pressure swing adsorption (PSA) or a combination of at least one PSA with a downstream membrane are used as said hydrogen gas purification unit (34).

9. Apparatus (2) for the production of hydrogen gas from ammonia, thereby obtaining an effluent gas (6) comprising hydrogen gas (4) from an ammonia feedstock stream (8), said apparatus (2) comprising:
- at least one electrical heating and conversion stage (9, 10) comprising:
o an electric heater (12) configured to receive the ammonia feedstock stream (8) so as to produce a heated gas stream (14); and
o an adiabatic reactor (16) arranged to perform an endothermic cracking reaction of the heated gas stream (14), said adiabatic reactor (16) comprising at least one catalyst bed (18) suitable for said endothermic cracking reaction of the ammonia feedstock stream (8) into effluent gas (6) comprising hydrogen gas (4).

10. Apparatus (2) according to claim 9, comprising: a vaporizer (19) configured to provide a vaporized ammonia feedstock stream (21) from the ammonia feedstock stream (8).

11. Apparatus (2) according to claim 9 or 10, further comprising: a preheater (24) a to preheat the ammonia feedstock stream (8) so as to produce a preheated ammonia feedstock stream (26) upstream of the at least one electrical heating and conversion stage (9, 10).

12. Apparatus (2) according to claim 11, further comprising:
an upstream cracking stage (40) upstream of the at least one electrical heating and conversion stage (9, 10), said upstream cracking stage (40) comprising:
a heat source including a water boiler, or the preheater (24), or a combination thereof.

13. Apparatus (2) according to any one of claims 9 to 12, further comprising at least a bypass line configured to bypass at least one or some of the heating and conversion stages (9, 10).

14. Use of the apparatus (2) according to any one of claims 9 to 13 for an endothermic cracking reaction of an ammonia feedstock stream (8) into an effluent gas (6) comprising hydrogen gas (4).
